# EUROPEAN PATENT SPECIFICATION

(11) **EP 1 118 849 B1**
(45) Date of publication and mention of the grant of the patent: **14.08.2002**
(21) Application number: 01100991.7
(22) Date of filing: 17.01.2001
(51) Int. Cl.: G01L 9/00

(54) **High-pressure sensor with one or two threaded stems bearing multi-pad sensor chips**
Hochdruckwandler mit ein oder zwei Gewindeschäften mit Vielkontakt Sensor Chips
Capteur à haute pression avec une ou deux tiges filetées avec des chips à contacts multiples

(30) Priority: 18.01.2000 JP 2000013935; 18.01.2000 JP 2000013936; 26.10.2000 JP 2000327503; 26.10.2000 JP 2000327510
(43) Date of publication of application: 25.07.2001
(73) Proprietor: Denso Corporation, Kariya-city, Aichi-pref., 448-8661 (JP)
(72) Inventor: Imai, Masahito, c/o Denso Corporation, Kariya-city, Aichi-pref., 448-8661 (JP)
(74) Representative: Winter, Brandl, Fürniss, Hübner, Röss, Kaiser, Polte Partnerschaft

(56) References cited:
- WO-A-98/01731
- DE-A- 19 843 471
- FR-A- 2 791 430
- US-A- 4 939 497
- US-A- 5 119 680

## Description

This invention relates to a pressure sensor having a housing capable of introducing a pressure and a stem having a diaphragm for detecting the pressure and connected to the housing, especially to a pressure sensor suitably used to detect a high pressure of, for example, about 200 MPa.

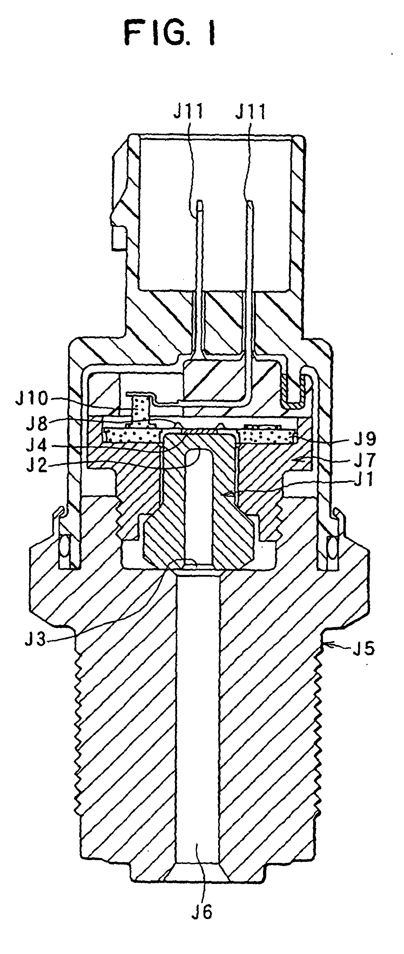

The present applicant proposes this kind of pressure sensor in Japanese Patent non-published Application No. 11-82180 (FR-A-279/430 published 29,9,00). A pressure sensor that was fabricated as a prototype based on this preceding application is shown in Fig. 1, which can be applied for a pressure sensor capable of detecting a high pressure (fuel pressure) in a fuel pipe in a vehicular fuel injection system (for example, common rail).

Referring to Fig. 1, the pressure sensor has a hollow cylindrical metallic stem J1 that has a thin diaphragm J2 as a closing portion at an end in an axial direction thereof, and an opening portion J3 at the other end in the axial direction. The stem J1 holds a chip (detecting portion) J1 for detecting a pressure, fixed to the diaphragm J2 by glass-bonding. The opening portion J3 communicates with a pressure conduction hole (pressure conduction passage) J6 defined in a housing J5.

The stem J1 is fixed to the housing J5 by a separate screw member J7, and accordingly, the end face of the stem J1 at the side of the opening portion J3 is pushed against the opening edge portion of the pressure conduction hole J6 to be sealed. Accordingly, high air-tightness can be provided even when a high pressure is introduced.

In this sensor, the diaphragm J2 is deformed by the pressure introduced from the pressure conduction hole J6, and the deformation is converted into an electric signal by the chip J4. The converted electric signal is outputted to an external circuit (such as a vehicle ECU, not shown) via a wire J8, a circuit board J9, a pin J10, and a connector terminal J11, thereby detecting the pressure.

In the prototype sensor, however, because the screw member J7 separate from the stem J1 is used for fixing the stem J1 to the housing J5 while keeping the air tightness with respect to the high pressure, the size of the housing J5 is enlarged for holding the screw member J7. This results in the increase in size of the sensor.

The present invention has been made in view of the above problem. An object of the present invention is, in a pressure sensor, to provide a fixation structure of a stem to a housing capable of reducing a size of the pressure sensor.

According to the present invention, briefly, a pressure sensor is composed of a housing having a pressure conduction passage, and a cylindrical stem accommodated in the housing and having a diaphragm that is deformed by the pressure introduced from the pressure conduction passage. The stem integrally has a screw portion at an outer peripheral side surface thereof that is connected with the housing by screw fastening.

The pressure sensor of the present invention does not have a separate screw member for connecting the stem and the housing, thereby providing a fixation structure of the stem to the housing while realizing the size reduction of the housing. Because the stem having an opening portion can be sealed with the housing at the pressure conduction passage side by an axial force of screw fastening pushing the stem against the housing, the pressure sensor can be suitably used to detect a high pressure.

The pressure sensor may have several stems respectively having chips to enable failure diagnosis with respect to electrical breakage, damage of a detecting portion (for example, separation of the chip from the stem), and the like. Specifically, output signals from the respective chips are compared to each other in a circuit provided in the sensor or in an external circuit, and accordingly, output abnormality occurring in one of the chips can be detected readily.

Other objects and features of the present invention will become more readily apparent from a better understanding of the preferred embodiments described below with reference to the following drawings, in which;
Fig. 1 is a cross-sectional view showing a pressure sensor that was fabricated as a prototype;
Fig. 2 is a cross-sectional view showing a pressure sensor according to a preferred embodiment of the invention;
Fig. 3A is schematic view showing a main part of the pressure sensor, in a direction indicated by arrow IIIA in Fig. 2;
Fig. 3B is a cross-sectional view taken along line IIIB-IIIB in Fig. 3A;
Fig. 4 is an enlarged view showing an end of a stem in an axial direction thereof;
Figs. 5A and 5B are top view and cross-sectional view showing a structure of the stem;
Fig. 6 is a table showing bonding patterns and electrically connecting states between ceramic substrates and sensor chips in three cases;
Fig. 7 is a schematic view showing a connecting constitution on a sensor chip by bonding wires as a comparative example;
Fig. 8 is a cross-sectional view showing a modification of the embodiment; and
Fig. 9 is a cross-sectional view showing another modification of the embodiment.

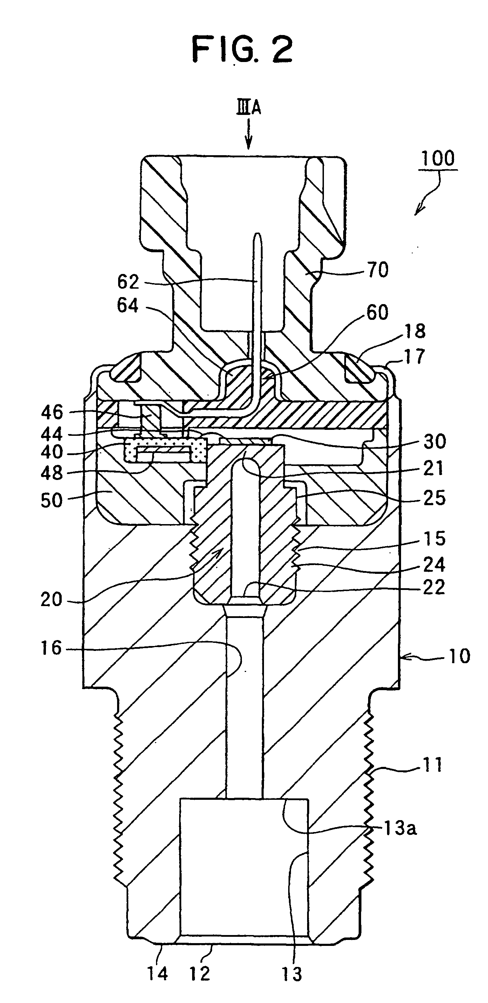

Hereinafter, the preferred embodiment of the invention will be explained. Fig. 2 shows an entire construction of a pressure sensor 100 in the embodiment. The pressure sensor 100 is attached to a fuel pipe in a vehicular fuel injection system (for example, common rail) for detecting a pressure (high pressure of, for example, about 200MPa) of liquid or gas-liquid mixture as a pressure medium in the fuel pipe.

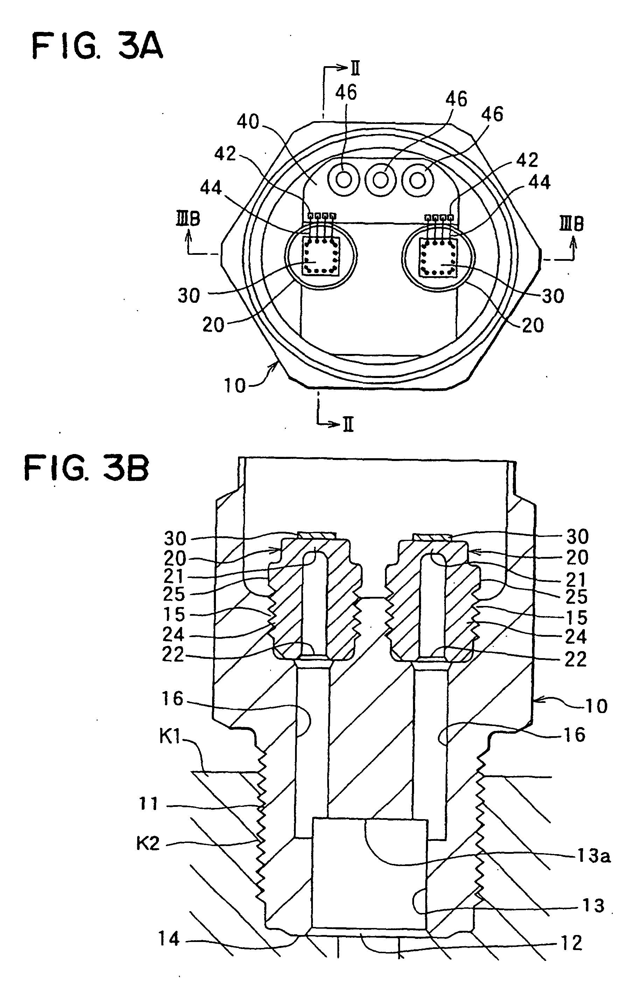

Figs. 3A and 3B show a housing portion excluding a connector portion, i.e., a main part in this embodiment. Fig. 3A is a view in the direction of allow IIIA in Fig. 2, and Fig. 3B is a cross-sectional view taken along line IIIB-IIIB in Fig. 3A. Incidentally, Fig. 2 is a cross-sectional view taken along line II-II in Fig. 3A.

Reference numeral 10 denotes a metallic housing that is processed by cutting or cold forging and has a screw portion 11 at one end side outer peripheral surface thereof. The screw portion 11 can be connected to a measurement object (fuel pipe) K1 by screw fastening. As shown in Fig. 3A, the screw portion 11 of the housing 10 is screwed in a screw hole K2 of the fuel pipe K1 as the measurement object. The housing 10 and the pipe K1 are sealed by a housing sealing face 14 provided at an end of the housing 10.

A hole is provided in the housing 10 to extend from an opening portion 12 formed at the end of the housing 10. This hole functions as a pressure conduction passage 13 for introducing a pressure from the fuel pipe K1. In this embodiment, the cross-section of the pressure conduction hole 13 is a circle, which is coaxial with a rotational axis of the screw portion 11.

Further, as shown in Fig. 3B, an end 13a of the pressure conduction passage 13 in the housing 10 is positioned at a height equal to or lower than that where the screw portion 11 of the housing 10 is fixed to the fuel pipe K1. Accordingly, the entirety of the pressure conduction passage 13 can be located at a position corresponding to the portion where the screw portion 11 of the housing 10 is screwed to the pipe K1.

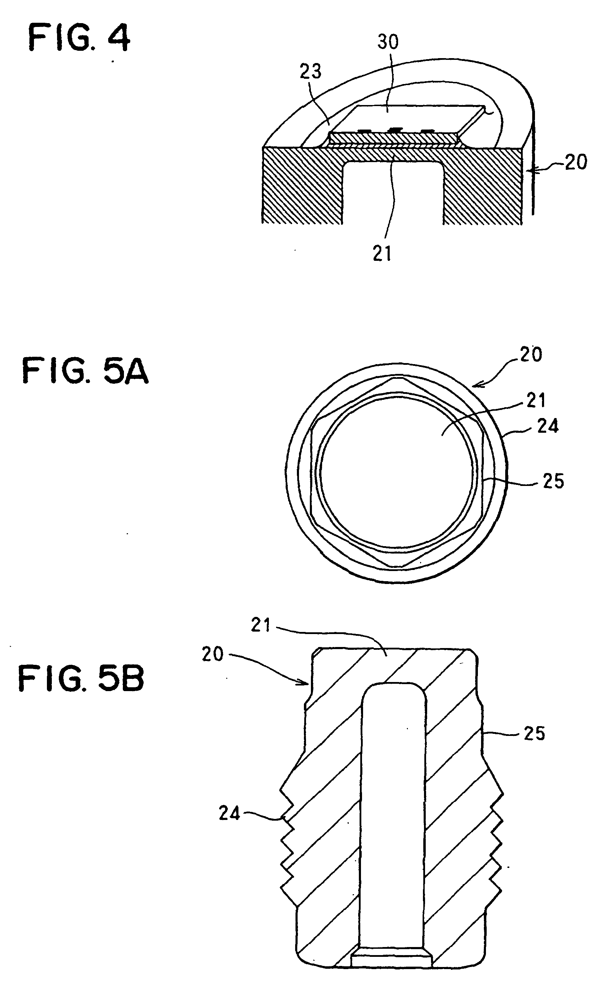

Reference numeral 20 denotes metallic stems each formed in a hollow cylindrical shape. The two stems 20 are attached to the other end of the housing 10, and are accommodated in the housing 10. Each of the stems 20 has a thin diaphragm 21 at an end in the axial direction, and an opening portion 22 at the other end in the axial direction. The diaphragm 21 is deformable by the pressure introduced into the housing 10, and the opening portion 22 communicates with the pressure conduction passage 13. Fig. 4 is an enlarged perspective view showing the end of each stem 20 with a cross-section.

A sensor chip 30 made of single crystal Si (silicon) for detecting the pressure is bonded to the diaphragm 21 of the stem 20 by low melting point glass 23. The sensor chip 30 has a bridge circuit, and functions as a detecting portion (strain gauge) that converts a change in resistance thereof, responding to the deformation of the diaphragm 21 caused by the pressure, into an electric signal, and outputs the electric signal. The diaphragm 21 and the sensor chip 30 control the basic characteristics of the sensor 100.

Further, each stem 20 is integrally formed with a male screw portion 24 on an outer periphery side surface thereof by cutting work. The male screw portion 24 is to be connected with the housing 10 by screwing while pushing the stem 20 against the housing 10 in the axial direction. The stem 20 further has a nut portion 25 having a shape such as a hexagon capable of applying a fastening force, at the end side of the male screw portion 24 in the axial direction. The male screw portion 24 has a shape corresponding to a female screw portion 15 that is formed with a screw hole in the housing 10 for fixing the stem. The two screw portions 24, 25 are fastened together to fix the stem 20 to the housing 10.

The nut portion 25 is formed at the outer peripheral side surface of the stem 20 between the stem 24 and the diaphragm 21, and functions as a face portion to which the fastening force is applied for screwing the male screw portion 24. Specifically, a jig for screwing, such as a wrench or a spanner is made to abut the outer peripheral surface of the nut portion 25, and to rotate the stem 20 around the rotational axis of the male screw portion 24. Accordingly, the screw connection described above can be achieved.

The nut portion (face portion) 25 is explained in more detail referring to Figs. 5A and 5B. As shown in Figs. 5A and 5B, in this embodiment, the nut portion 25 has a hexagonal shape, and is thicker than that portion of the stem 20 between the nut portion 25 and the diaphragm portion 21. That is, the outer peripheral surface of the nut portion 25 protrudes from the outer periphery of the diaphragm 21 outward in the radial direction thereof.

Referring back to Fig. 3B, the housing 10 has communication passages 16 through which the opening portion 22 of each stem 20 communicates with the pressure conduction passage 13. Here, because a pushing force is applied to the stem 20 toward the other end side (the side of the opening portion 22) in the axial direction by fastening the screw portions 15, 24, the pushing force seals the end face of the stem 20 at the side of the opening portion 22 and the opening edge portion of a corresponding one of the communication passages 16 of the housing 10. Thus, the pressure in the fuel pipe K1 is introduced into the stems 20 from the pressure conduction passage 13 through the communication passages 16.

In this embodiment, as described above, the cross-sectional shape of the pressure conduction passage 13 is a circle that is coaxial with the rotational axis of the screw portion 11 of the housing 10. Further, the rotational axis of the male screw portion 24 of each stem 20 is positioned on the circumference of the pressure conduction passage 13. In other words, a concentric circle of the screw portion 11 of the housing 10 constitutes the cross-section of the pressure conduction passage 13, and the rotational axis of the male screw portion 24 of the stem 20 exists on the circumference of this concentric circle.

Metallic material forming the stem 20 is required to have a high strength for receiving a high pressure, and a low thermal expansion coefficient for being bonded to the sensor chip 30 made of Si through the glass 23. Specifically, Fe, Ni, and Co, or Fe and Ni are used as main components to which Ti, Nb, and Al, or Ti and Nb are added, and pressing, cutting, or cold forging is performed to form the stem 20.

The housing 10 enables the fixation (sealing under an extremely high pressure and mechanical support) to the fuel pipe K1, fixation (sealing under an extremely high pressure and mechanical support) of the stem 20, and fixation (sealing and mechanical support) of a connector case 70 described below.

The housing 10 is therefore required to have corrosion resistance to pressure medium and vehicle environment, and a screw strength sufficient for keeping an axial force for producing a high sealing bearing pressure at the sealing portion with the end face of the stem 20 at the side of the opening portion 22. To comply with these requirements in quality, carbon steel (for example S15C) having both corrosion resistance and high strength and plated with Zn for improving the corrosion resistance, or material having corrosion resistance such as XM7, SUS430, SUS304, or SUS630 can be adopted as the materials.

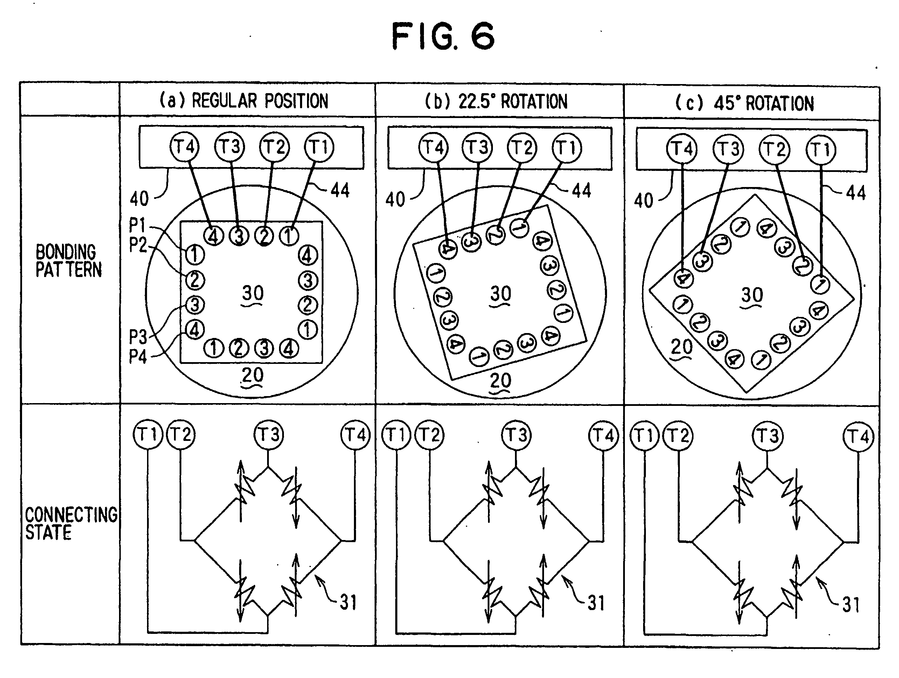

Reference numeral 40 denotes a ceramic substrate (circuit board), and this ceramic substrate 40 is bonded to a spacer 50 disposed at the outer periphery of the stem 20 inside the housing 10. The substrate 40 can be positioned by the spacer 50 at a height approximately equal to that of the diaphragm 21 of the stem 20. Further, as shown in Fig. 3A, each sensor chip 30 and terminals 42 of the ceramic substrate 40 (each four in the figure, corresponding to terminals T1 to T4 of Fig. 6 described below) are electrically connected to each other by bonding wires 44 made of aluminum (Al) or the like.

Pins 46 for being electrically connected to a connector terminal 60 are bonded, by silver brazing filler metal or the like, to the wire-bonding surface of the ceramic substrate 40 to which wire-bonding is performed for the sensor chip 30. An Amp IC chip 48 for amplifying the output from each sensor chip 30 and a characteristic control IC chip 48 are bonded to the surface of the ceramic substrate 40 at an opposite side of the wire-bonding surface. These IC chips 48 are electrically connected with the pins 46 via through holes and the like formed in the substrate 40.

Referring back to Fig. 2, the connector terminal 60 is constructed of terminals 62 insert-molded in resin 64. The terminals 62 are bonded to the pins 46 of the ceramic substrate 40 by laser welding. The connector case 70 and the spacer 50 fixedly hold the connector terminal 60 by caulking an end 17 of the housing 10 onto the connector case 70. The terminals 62 are electrically connectable to the vehicle ECU or the like via wiring members.

The connector case 70 forms a contour of the connector terminal 60, and integrated with the housing 10 by caulking the end 17 of the housing 10 to the connector case 70, thereby forming a package with the housing 10. The connector case 70 protects the sensor chips 30, various ICs, and the electrical connecting portions provided in the package, from moisture and mechanical external forces. Incidentally, a sealing member 18 seals the caulked portion between the connector case 70 and the housing 10. The connector case 70 is made of, for example, PPS (polyphenylene sulfide) or the like having a high hydrolysis property.

Next, an assembling method of the pressure sensor 100 having the structure described above is explained. First, each stem 20 to which the sensor chip 30 is bonded by the glass 23 is fixedly connected to the housing 10 via the nut portion 25 by screw fastening. Then, the spacer 50 is installed in the housing 10, and the ceramic substrate 40 is adhered to the spacer 50.

Each sensor chip 30 is electrically connected to the terminals 42 of the ceramic substrate 40 by wire bonding. The connector terminal 60 and the pins 46 are bonded together by laser welding (YAG laser welding). The connector case 70 is assembled with the housing 10, and the end 17 of the housing 10 is caulked with the sealing member 18. Accordingly, the connector case 70 and the housing 10 are fixed together. Thus, the pressure sensor 100 shown in Fig. 2 is completed.

The pressure sensor 100 assembled as above is fixedly connected to the fuel pipe (measurement object) K1 by directly attaching the screw portion 11 of the housing 10 into the screw hole K2 formed in the fuel pipe K1.

When the fuel pressure (pressure medium) in the fuel pipe K1 is introduced from the pressure conduction passage 13 into each stem 20 (hollow portion) through each communication passage 16 and the opening portion 22 of the stem 20, the diaphragm 21 is deformed by the pressure. This deformation is converted into an electric signal by the sensor chip 30 to perform the pressure detection. Then, fuel injection control is performed by the ECU and the like based on the detected pressure (fuel pressure).

Here, in this embodiment, the output signals from the two sensor chips 30 are compared on the ceramic substrate 40 constituting a processing circuit portion of the sensor or on an external circuit (on the ceramic substrate 40 in this embodiment). When one of the output signals has abnormality, the abnormality can be easily detected by being compared with the other signal that is normal. Thus, the failure diagnosis of the sensor becomes easy.

Thus, according to the present embodiment, because each of the two stems 20 is integrally formed with the screw portion 24 that performs the screw fastening with the housing 10 while pushing the stem 20 against the housing 10 in the axial direction, there is no need to provide a screw member separately for fixing the stem 20 to the housing 10. Also, the opening portion 22 of the stem 20 can be pushed by the axial force of the screw fastening, against the housing 10 at the side of the pressure conduction passage 13 (the opening edge portion of the communication passage 16). This is suitable for high-pressure detection.

Because the outer diameter of each stem 20 is suppressed at a magnitude capable of mounting the sensor chip 30 and a separate screw member is not used, the size of the housing can be reduced. Further, a fixation structure of the stems, capable of arranging several chips, to the housing can be provided. Furthermore, because the communication passages 16 are respectively provided for the stems 20, each of the communication passages 16 can conduct a pressure appropriate to the diaphragm 21 of each stem 20.

The respective rotational axes of the screw portions 24 of the stems 20 are positioned on a circumference of a circle that is coaxial with the rotational axis of the screw portion 11 (center axis of the housing) provided on the outer peripheral surface of the housing 10, and the pressure conduction passage 13 is provided to have a circular cross-section corresponding to the circle described above.

Accordingly, the rotational axis of the screw portion 11 of the housing 10 is coincident with the axis of the pressure conduction passage 13. Because of this, the pressure conduction passage 13 can be formed in the housing 10 easily by cutting, cold forging or the like. Further, because the rotational axes of the screw portions 24 of the stems 20 are positioned on the circumference of the circle described above, the passage cross-sectional area of the pressure conduction passage 13 needs not be increased unnecessarily. This results in size reduction of the housing 10.

Incidentally, if one of the rotational axes of the screw portions 24 of the stems 20 is shifted from the circumference of the circle constituting the outer periphery of the pressure conduction passage 13, the cross-sectional shape of the pressure conduction passage 13 becomes eccentric with respect to the center axis of the housing 10. Because of this, the thickness of the housing 10 at the opening portion 12 of the passage 13 becomes non-uniform, and the area of the housing sealing face 14 also becomes non-uniform. These situations are undesirable.

According to the present embodiment, in the pressure conduction passage 13 as a hole extending from the opening portion 12 as a starting point into the housing 10, the end point 13a of the hole in the housing 10 is provided at a position corresponding to that part where the screw portion 11 of the housing 10 is screwed to the fuel pipe (measurement object) K1. Therefore, the portion of the housing 10 where the pressure conduction passage 13 is formed is supported by the pipe K1 at the outer periphery thereof in a state where it is attached to the pipe K1. Because of this, stress is suppressed from being concentrated on the housing 10 due to a high pressure applied inside the pressure conduction passage 13.

According to the present embodiment, the IC chips 48 are arranged on the surface of the ceramic substrate (circuit board) 40 at the opposite side of the wire-bonding surface thereof. This arrangement contributes to effective usage of the space in the housing 10 and the size reduction of the sensor.

According to the present embodiment, each stem 20 has the nut portion (face portion) 25 on the outer peripheral side surface thereof between the diaphragm 21 and the male screw portion 24, for applying the fastening force to the male screw portion 24 when screw fastening. Therefore, the screw fastening between the stem 20 and the housing 10 can be performed readily. The shape of the nut portion 25 is not limited to a hexagonal shape having six faces, but may be another shape provided that it has two surfaces facing each other with a specific angle at which screw fastening can be performed.

In this embodiment, as a preferable configuration, as shown in Fig. 5B, the nut portion 25 is made thicker than that portion between the nut portion 25 and the diaphragm 12 in the stem 20, and is positioned with an outer peripheral surface thereof protruding outward in the radial direction from the outer periphery of the diaphragm 21.

The screw fastening of the stem 20 and the housing 10 is, as described above, performed by rotating the stem 20 with the jig abutting the outer peripheral surface of the nut portion 25. At that time, because the outer peripheral surface of the nut portion 25 protrudes outward from the outer periphery of the diaphragm 21, the jig is prevented from being brought in contact with the diaphragm 21 and the sensor chip (detecting portion) 30.

Further, because the nut portion 25 is thicker than that portion between the nut portion 25 and the diaphragm 21 in the stem 20, the force for fastening the screws is less liable to be transmitted to the diaphragm 21 and the sensor chip 30 for functioning as the detecting portion of the pressure sensor. As a result, damages to the detecting portion can be lessened.

Meanwhile, the stem 20 is screw-connected in this embodiment. Therefore, at the step for wire-bonding each sensor chip 30 and the terminals 42 of the ceramic substrate 40, there arises a possibility that the sensor chip 30 may be shifted from a desirable position around the rotational axis of the screw portion 24 of the stem 20 to make the wire-bonding difficult, or to cause necessity for adjusting the position of the ceramic substrate 40. In this embodiment, as shown in Fig. 6, this problem is solved by arrangement of pads on the sensor chip 30.

Fig. 6 schematically shows (in a stem rotational axis direction) a connecting structure of the sensor chip 30 and the ceramic substrate 40 via wires 44 in cases where (a) the chip 30 is disposed at a regular position, (b) the chip 30 is disposed at a position rotated from the regular position in a counterclockwise direction at 22.5°, and (c) the chip 30 is disposed at a position rotated from the regular position in a counterclockwise direction at 45° .

As shown in Fig. 6, the sensor chip 30 is formed with pads P1 to P4 by deposition of Al (aluminum) or the like for wire bonding. Incidentally, in Fig. 6, the pads P1, P2, P3, and P4 are indicated with ①, ②, ③, and ④, respectively. In this embodiment, the four pads P1 to P4 form one set, and four sets of the pads are arranged at the rectangular peripheral portion of the chip 30. In each set, the pads P1, P2, P3, and P4 are arranged in this order in the counterclockwise direction with respect to the stem rotational axis.

The pads P1, P2, P3, and P4 in each set are a pad for a power source terminal of the bridge circuit 31 of the chip 30, a pad for an output (-) terminal, a pad for a power source terminal, and a pad for an output (+) terminal, respectively. The pad P1 for the power source terminal, pad P2 for the output (-) terminal, pad P3 for the power source terminal, and pad P4 for the output (+) terminal are, at the regular position shown in case (a), respectively connected to a power source terminal T1, an output (-) terminal T2, a power source terminal T3, and an output (+) terminal T4 as the terminals 42 of the substrate, by the wires 44. Accordingly, the chip 30 and the bridge circuit 31 are connected as shown in the figure.

In the positional deviated state at a degree shown in Fig, 6, the case (b), the wire bonding can be performed using the set (first set) of the pads P1 to P4 connected at the regular position while keeping the connecting state at the regular position. However, in the state shown in Fig. 6, the case (c), since the positional deviation is large, the wires necessitated for connecting the pads P1 and P2 in the first set are too long if the connection is made only by the first set. The long wires may be subject to breakage thereof and deterioration in bonding performance due to resonance produced by wire bonding, and make the connection substantially impossible.

However, according to the present embodiment, even in the case (C) of Fig. 6 where the positional deviation is large, pads P1 and P2 of another set (second set) adjacent to the first set are located at positions capable of being connected with the terminals T1 and T2 of the ceramic substrate 40.

Therefore, the circuit property provided when the wire bonding is performed at the regular position can be attained by wire-bonding the terminals T1 to T4 of the ceramic substrate 40 with the pads P1 to P4 of the sensor chip 30 as shown in the case (c) of Fig. 6 while utilizing the symmetric property of the bridge circuit 31. That is, in all the bridge circuits 31 in the cases (a) to (c) of Fig. 6, both the resistance change directions between T1 and T4, and between T2 and T3 are increasing directions, and the equivalent circuit properties can be attained.

Also, when the sensor chip 30 is rotated from the regular position in the clockwise direction at 90° (not shown in Fig. 6), the wire bonding with the terminals T1 to T4 of the ceramic substrate 40 is made possible by substituting the pads P1 to P4 of the second set for those of the first set, and accordingly the circuit property at the regular position can be maintained. Substantially the same effects as the case of the rotation in the counterclockwise direction can be attained even when the sensor chip 30 is deviated in position in the clockwise direction with respect to the stem rotational axis.

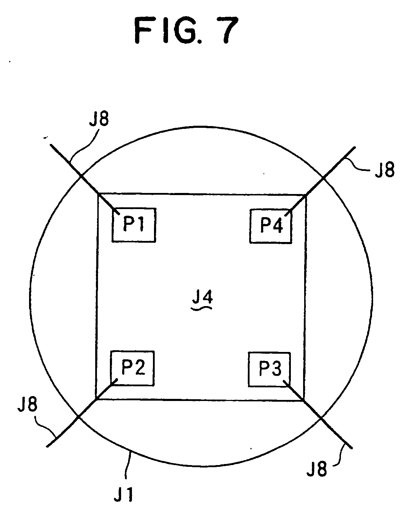

As a comparative example, Fig. 7 schematically shows a conventional connecting structure of bonding wires J8 on a sensor chip J4. In this case, pads P1, P2, P3, and P4 for terminals of a bridge circuit on the chip J4 are respectively disposed on the four corners of the rectangular sensor chip J4, and are connected with wires J9 as shown in the figure.

At this pad arrangement, when the chip J4 is deviated from a regular position as a result of rotation around the rotational axis (stem rotation axis) of the stem J1, there may arise a case where some of the pads are too far from the bonding positions at the ceramic substrate side to be connected by the wires J9, and the wires J9 mutually cross or become too long. This may cause problems such as short-circuit, breakage of the wires due to resonance produced during the wire bonding, and deterioration in consistency. These problems make the bonding impossible or make it impossible to maintain the circuit properties of the bridge circuit provided at the regular position.

Incidentally, in the cases shown in Fig. 6, each side portion of the rectangular chip 30 holds one set composed of the pads P1 and P3 for the power source terminals and the pads P2 and P4 for the output terminals, and the order of the pads P1 to P4 in each set is made identical around the stem rotation axis; however, it is not always necessary that each side of the chip 30 has one set of the pads.

For example, each side may have two sets or more, or one and a half sets of the pads (for example, six pads of P1, P2, P3, P4, P1, and P2). Also, the order of the pads in one set is not limited to that shown in the figure, and the shape of the chip 30 is not limited to a rectangle.

In a word, in the present embodiment, when the pads P1 and P3 for the power source terminals of the bridge circuit 31 of the chip 30 and the pads P2 and P4 for the output terminals are repeatedly arranged in a specific order around the screw fastening rotational axis (stem rotation axis) of the stem, the bonding wires 44 can be connected so that the circuit properties equivalent to the case where the chip 30 is arranged at the regular position can be maintained.

According to the present embodiment, even when the positional deviation of the chip 30 occurs around the stem rotational axis, the wire bonding can be performed readily, and the position of the ceramic substrate 40 needs not be corrected. Because the assembling steps of the sensor following that of the ceramic substrate 40 are performed using this substrate 40 as a base, the positional deviation of the chip 30 does not affect those assembling steps in the sensor 100.

Thus, the present embodiment is mainly characterized in that each of the two stems 20 has the screw portion 24 on the outer peripheral side surface thereof, is screw-connected to the housing 10 via the screw portion 24 while being pushed toward the housing in the axial direction. This embodiment adopts the two stems 20 as an example; however, as shown in Fig. 3A, there exists a space capable of disposing another stem. That is, in Fig. 3A, three stems may be arranged with three rotational axes forming a triangle. If possible, more than three stems may be arranged.

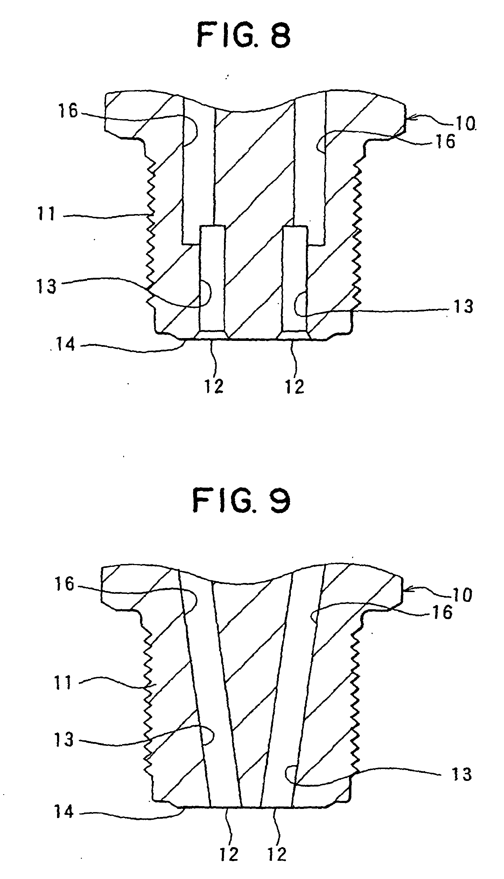

As a modification of the present embodiment, as shown in Fig. 8, the pressure conduction passage 13 may be composed of several holes in accordance with the respective communication passages 16.

When the pressure conduction passages 13 are provided for the respective communication passages 16 which are provided for the respective several stems 20, the volume of the pressure conduction passages 13 in the housing 10 can be minimized as compared to the case where only one communication passage 13 is provided for the communication passages 16 as shown in Fig. 3B. Because of this, the rigidity of the housing 10 where the pressure conduction passages 13 are provided can be appropriately attained, which is also suitable for improving the withstand pressure of the sensor.

Further, as shown in Fig. 8, when the pressure conduction passages 13 are shifted from the corresponding axes of the communication passages 16 to the center axis of the housing 10, the outer peripheral portion area of each pressure conduction passage 13 in the housing 10 can be secured. The outer peripheral portion of each pressure conduction passage 13 forms the housing sealing surface 14 for sealing the sensor with respect to the measure object K1, and the sealing property with the measure object K1 can be improved by securing the area of the sealing surface 14. As a result, the pressure sensor suitable for improving the withstand pressure can be realized.

Also, in the pressure sensor 100 as described above, the pressure conduction passage 13 is composed of a hole extending from the opening portion 12, provided at the end of the housing, into the housing 10 and having a circular cross-section. However, as another modification of this embodiment, as shown in Fig. 9, two pressure conduction passages 13 may be formed to extend from the opening portions 12 into the housing 10 obliquely.

In this case, each opening portion 12 of the pressure conduction passages 13 can be miniaturized and the area of the housing sealing surface 14 as the sealing portion of the sensor with the measure object K1 can be increased. That is, the sealing property with the measurement object K1 can be improved, and accordingly, the pressure sensor suitable for further improving the withstand pressure can be realized.

The number of the stems 20 may be one. In this case (not shown), for example, the one stem 20 should be arranged so that the rotational axis of the screw portion 11 of the housing 10 is coincident to the rotational axis of the screw portion 24 of the stem 20. The detecting portion disposed on the diaphragm to output electric signals in response to the deformation of the diaphragm is not limited to the sensor chip described above, but may be composed of strain gauges which are formed by being directly deposited on the diaphragm.

While . the present invention has been shown and described with reference to the foregoing preferred embodiments, it will be apparent to those skilled in the art that changes in form and detail may be made therein without departing from the scope of the invention as defined in the appended claims.

## Claims

1. A pressure sensor comprising:
a housing (10) having a pressure conduction passage (13) for introducing a pressure;
a cylindrical stem (20) accommodated in the housing (10), and having an opening portion (22) communicating with the pressure conduction passage (13) and a diaphragm (21) deformable by the pressure introduced from the pressure conduction passage (13) through the opening portion (22); and
a detecting portion (30) disposed on the diaphragm for outputting an electric signal in response to deformation of the diaphragm (21), wherein;
the stem (20) integrally has a screw portion (24) on an outer peripheral side surface thereof that is connected with the housing (10) by screw fastening.

2. The pressure sensor according to claim 1, wherein:
the stem (20) has the opening portion (22) at a first end in an axial direction thereof, and the diaphragm (21) at a second end in the axial direction; and
the screw portion (24) is screwed to the housing (10) while pushing the stem (20) toward the housing (10) in the axial direction.

3. The pressure sensor according to claim 1 or 2, wherein the stem (20) is composed of first and second stems respectively having first and second screw portions (24) on outer peripheral side surfaces thereof.

4. The pressure sensor according to claim 3, wherein the housing (10) has first and second communication passages (16) through which opening portions (22) of the first and second stems (20) and the pressure conduction passage (13) communicate with each other.

5. The pressure sensor according to claim 4, wherein the pressure conduction passage (13) is composed of first and second conduction passages respectively communicating with the opening portions (22) of the first and second stems (20) through the first and second communication passages (16).

6. The pressure sensor according to claim 5, wherein each of the first and second conduction passages (13) is shifted from an axis of a corresponding one of the first and second communication passages (16) toward a center axis of the housing (10).

7. The pressure sensor according to claim 5 or 6, wherein the first and second conduction passages (13) extend in the housing (10) obliquely with respect to the first and second communication passages (16) to communicate with the first and second communication passages (16), respectively.

8. The pressure sensor according to claim 3 or 4, wherein:
the housing (10) has a housing screw portion (11) capable of being connected with a measurement object (K1) by screw fastening;
first and second rotational axes of the first and second stems (20) are positioned on a circumference of a circle coaxial with the housing screw portion (11); and
the pressure conduction passage (13) has a circular-cross section corresponding to the circle.

9. The pressure sensor according to any one of claims 1 to 4, wherein:
the housing (10) has a housing screw portion (11) capable of being connected with a measurement object (K1) by screw fastening;
the pressure conduction passage (13) is a hole extending from an opening portion (12) of the housing (10) to an end (13a) inside the housing (10), the end (13a) of the hole being provided at a position corresponding to a portion where the housing screw portion (11) is screwed to the measurement object (K1).

10. The pressure sensor according to claim 1 or 2, wherein the stem (20) has a face portion (25) on the outer peripheral side surface between the screw portion (24) and the diaphragm (21), the face portion being for applying a fastening force to the screw portion (24) when the stem (20) is screwed to the housing (10).

11. The pressure sensor according to claim 10, wherein:
the stem (20) is thick at the face portion (25) in a radial direction thereof as compared to a portion of the stem (20) between the screw portion and the diaphragm other than the face portion (25); and
the face portion (25) protrudes outwardly in the radial direction as compared to the portion.

12. The pressure sensor according to any one of claims 1 to 11, further comprising a circuit board (40) disposed in the housing and having a power source terminal (T1, T3) and an output terminal (T2, T4), wherein:
the detecting portion (30) has a bridge circuit (31) for outputting the electric signal in response to the deformation of the diaphragm (21), and has a plurality of sets of first and second pads (P1-P4) repeatedly arranged thereon in a specific order;
in each of the plurality of sets of first and second pads, the first pad is for the power source terminal, and the second pad is for the output terminal; and
one first pad in the plurality of sets of first and second pads is connected with the power source terminal by a first bonding wire (44); and
one second pad in the plurality of sets of the first and second pads is connected with the output terminal by a second bonding wire (44).

13. The pressure sensor according to claim 12, wherein the power source terminal and the output terminal are connectable to the one first pad and the one second pad so that a circuit property, provided when the detecting portion is disposed at a regular position with respect to the circuit board, can be maintained even when a position of the detecting portion is deviated from the regular position around a rotational axis of the screw portion as a result of rotation of the screw portion.

14. The pressure sensor according to claim 12 or 13, wherein:
the power source terminal is composed of at least two power source terminals;
the output terminal is composed of at least two output terminals;
each first pad is composed of at least two pads; and
each second pad is composed of at least two pads.

15. The pressure sensor according to any one of claims 12 to 14, wherein:
the detecting portion has a rectangular shape with four side portions;
four sets of first and second pads are respectively disposed on the four side portions of the detecting portion; and
an order of the first and second pads in each set is identical around the rotational axis of the screw portion.

16. The pressure sensor according to any one of claims 1 to 15, wherein the screw portion of the stem is connected with the housing directly.

## Patentansprüche

1. Drucksensor, der aufweist:
ein Gehäuse (10), das einen Druckleitungsdurchlass (13), um einen Druck einzuführen;
einen im Gehäuse (10) untergebrachten zylindrischen Schaft (20), der einen Öffnungsabschnitt (22), der mit dem Druckleitungsdurchlass (13) verbunden ist, und eine Membran (21), die durch den Druck verformbar ist, der vom Druckleitungsdurchlass (13) durch den Öffnungsabschnitt (22) eingeführt wird; und
einen Erfassungsabschnitt (30) aufweist, der auf der Membran angeordnet ist, um ein elektrisches Signal als Antwort auf die Verformung der Membran (21) abzugeben, wobei:
der Schaft (20) integriert einen Schraubabschnitt (24) auf einer äußeren Seitenoberfläche aufweist, der mit dem Gehäuse (10) durch Schraubbefestigung verbunden ist.

2. Drucksensor nach Anspruch 1, wobei:
der Schaft (20) den Öffnungsabschnitt (22) an einem ersten Ende in einer axialen Richtung desselben und die Membran (21) an einem zweiten Ende in der axialen Richtung aufweist; und
der Schraubabschnitt (24) am Gehäuse (10) angeschraubt ist, während er den Schaft (20) in der axialen Richtung an das Gehäuse (10) drückt.

3. Drucksensor nach Anspruch 1 oder 2, wobei der Schaft (20) aus ersten und zweiten Schäften besteht, die jeweils erste und zweite Schraubabschnitte (24) auf ihren äußeren Seitenoberflächen aufweisen.

4. Drucksensor nach Anspruch 3, wobei das Gehäuse (10) erste und zweite Verbindungsdurchlässe (16) aufweist, durch die Öffnungsabschnitte (22) der ersten und zweiten Schäfte (20) und der Druckleitungsdurchlass (13) miteinander verbunden sind.

5. Drucksensor nach Anspruch 4, wobei der Druckleitungsdurchlass (13) aus ersten und zweiten Leitungsdurchlässen besteht, die jeweils mit den Öffnungsabschnitten (22) der ersten und zweiten Schäfte (20) durch die ersten und zweiten Verbindungsdurchlässe (16) verbunden sind.

6. Drucksensor nach Anspruch 5, wobei jeder der ersten und zweiten Druckleitungsdurchlässe (13) gegenüber einer Achse eines zugehörigen aus den ersten und zweiten Verbindungsdurchlässen (16) in Richtung einer Mittenachse des Gehäuses (10) verschoben ist.

7. Drucksensor nach Anspruch 5 oder 6, wobei die ersten und zweiten Druckleitungsdurchlässe (13) sich im Gehäuse (10) in Bezug auf die ersten und zweiten Verbindungsdurchlässe (16) schräg erstrecken, um jeweils mit den ersten und zweiten Verbindungsdurchlässen (16) verbunden zu sein.

8. Drucksensor nach Anspruch 3 oder 4, wobei:
das Gehäuse (10) einen Gehäuseschraubabschnitt (11)
aufweist, der mit einem Messobjekt (K1) durch Schraubbefestigung verbunden werden kann;
erste und zweite Drehachsen der ersten und zweiten Schäfte (20) auf einem Umfang eines Kreises angeordnet sind, der zu dem Gehäuseschraubabschnitt (11) koaxial ist; und
der Druckleitungsdurchlass (13) einen dem Kreis entsprechenden, kreisförmigen Querschnitt aufweist.

9. Drucksensor nach einem der Ansprüche 1 bis 4, wobei:
das Gehäuse (10) einen Gehäuseschraubabschnitt (11)
aufweist, der mit einem Messobjekt (K1) durch Schraubbefestigung verbunden werden kann;
der Druckleitungsdurchlass (13) ein Loch ist, das sich von einem Öffnungsabschnitt (12) des Gehäuses (10) zu einem Ende (13a) im Gehäuse (10) erstreckt, wobei das Ende (13a) des Lochs an einer Position vorgesehen ist, die einem Abschnitt entspricht, wo der Gehäuseschraubabschnitt (11) mit dem Messobjekt (K1) verschraubt ist.

10. Drucksensor nach Anspruch 1 oder 2, wobei der Schaft (20) einen Außenflächenabschnitt (25) auf der äußeren Seitenoberfläche zwischen dem Schraubabschnitt (24) und der Membran (21) aufweist, wobei der Außenflächenabschnitt dazu dient, eine Befestigungskraft auf den Schraubabschnitt (24) auszuüben, wenn der Schaft (20) mit dem Gehäuse (10) verschraubt wird.

11. Drucksensor nach Anspruch 10, wobei:
der Schaft (20) am Außenflächenabschnitt (25) in radialer Richtung dick ist im Vergleich zu einem anderen Abschnitt des Schafts (20) zwischen dem Schraubabschnitt und der Membran als dem Außenflächenabschnitt (25); und
der Außenflächenabschnitt (25) im Vergleich zu dem Abschnitt in radialer Richtung nach außen hervorsteht.

12. Drucksensor nach einem der Ansprüche 1 bis 11, der weiterhin eine Leiterplatte (40) aufweist, die im Gehäuse angeordnet ist und einen Stromquellenanschluss (T1, T3), und einen Ausgangsanschluss (T2, T4) aufweist, wobei:
der Erfassungsabschnitt (30) eine Brückenschaltung (31) aufweist, um als Antwort auf die Verformung der Membran (21) das elektrische Signal auszugeben, und eine Vielzahl von Gruppen von ersten und zweiten Anschlussflächen (P1-P4) aufweist, die in einer bestimmten Ordnung darauf wiederholt angeordnet sind;
bei jedem aus der Vielzahl von Gruppen von ersten und zweiten Anschlussflächen die erste Anschlussfläche für den Stromquellenanschluss und die ,zweite Anschlussfläche für den Ausgangsanschluss ist; und
eine erste Anschlussfläche aus der Vielzahl von Gruppen von ersten und zweiten Anschlussflächen mit dem Stromquellenanschluss durch einen ersten Verbindungsdraht (44) verbunden ist; und
eine zweite Anschlussfläche aus der Vielzahl von Gruppen von ersten und zweiten Anschlussflächen mit dem Ausgangsanschluss durch einen zweiten Verbindungsdraht (44) verbunden ist.

13. Drucksensor nach Anspruch 12, wobei der Stromquellenanschluss und der Ausgangsanschluss mit der einen ersten Anschlussfläche und der einen zweiten Anschlussfläche so verbindbar sind, dass eine Schaltungseigenschaft, die vorgesehen ist, wenn der Erfassungsabschnitt bezüglich der Leiterplatte in einer planmäßigen Lage angeordnet ist, selbst dann erhalten werden kann, wenn eine Lage des Erfassungsabschnitts als Ergebnis der Drehung des Schraubabschnitts um eine Drehachse des Schraubabschnitts von der planmäßigen Lage abweicht.

14. Drucksensor nach Anspruch 12 oder 13, wobei:
der Stromquellenanschluss aus mindestens zwei Stromquellenanschlüssen besteht;
der Ausgangsanschluss aus mindestens zwei Ausgangsanschlüssen besteht;
jede erste Anschlussfläche aus mindestens zwei Anschlussflächen besteht; und
jede zweite Anschlussfläche aus mindestens zwei Anschlussflächen besteht.

15. Drucksensor nach einem der Ansprüche 12 bis 14, wobei:
der Erfassungsabschnitt eine rechteckige Form mit vier Seitenabschnitten aufweist;
vier Gruppen von ersten und zweiten Anschlussflächen jeweils auf den vier Seitenabschnitten des Erfassungsabschnitts angeordnet sind; und
eine Anordnung der ersten und zweiten Anschlussflächen in jeder Gruppe um die Drehachse des Schraubabschnitts identisch ist.

16. Drucksensor nach einem der Ansprüche 1 bis 15, wobei der Schraubabschnitt des Schafts mit dem Gehäuse direkt verbunden ist.

## Revendications

1. Capteur de pression, comprenant :
un corps (10) comportant un passage (13) de conduction de pression servant à introduire une pression ;
une tige cylindrique (20) logée dans le corps (10) et ayant une partie formant ouverture (22) communiquant avec le passage (13) de conduction de pression et une membrane (21) déformable par la pression introduite dans le passage (13) de conduction de pression via la partie formant ouverture (22) ; et
une partie de détection (30) disposée sur la membrane pour délivrer un signal électrique en réponse à la déformation de la membrane (21), dans lequel :
la tige (20) comporte une partie filetée (24) faisant corps avec elle sur sa surface latérale périphérique extérieure et accouplée avec le corps (10) par vissage.

2. Capteur de pression selon la revendication 1, dans lequel :
la tige (20) comporte la partie formant ouverture (22) à une première extrémité dans une direction axiale de celle-ci, et la membrane (21) à une deuxième extrémité dans la direction axiale ; et
la partie filetée (24) est vissée sur le corps (10) en poussant la tige (20) vers le corps (10) dans la direction axiale.

3. Capteur de pression selon la revendication 1 ou 2, dans lequel la tige (20) est composée d'une première et d'une deuxième tiges ayant une première et une deuxième parties filetées (24) sur des surfaces latérales périphériques extérieures de celles-ci.

4. Capteur de pression selon la revendication 3, dans lequel le corps (10) comporte un premier et un deuxième passages de communication (16) par lesquels des parties formant ouvertures (22) des première et deuxième tiges (20) et le passage (13) de conduction de pression communiquent entre elles.

5. Capteur de pression selon la revendication 4, dans lequel le passage (13) de conduction de pression est composé d'un premier et d'un deuxième passages de conduction communiquant respectivement avec les parties formant ouvertures (22) des première et deuxième tiges (20) par les premier et deuxième passages de communication (16).

6. Capteur de pression selon la revendication 5, dans lequel chacun des premier et deuxième passages de conduction (13) est décalé par rapport à un axe de l'un, correspondant, des premier et deuxième passages de communication (16) avec un axe central du corps (10).

7. Capteur de pression selon la revendication 5 ou 6, dans lequel les premier et deuxième passages de conduction (13) s'étendent dans le corps (10) de manière oblique par rapport aux premier et deuxième passages de communication (16) pour communiquer respectivement avec les premier et deuxième passages de communication.

8. Capteur de pression selon la revendication 3 ou 4, dans lequel :
le corps (10) comporte une partie filetée (11) de corps apte à être accouplée par vissage avec un objet de mesure (K1) ;
un premier et un deuxième axes de rotation des première et deuxième tiges (20) sont situés sur le pourtour d'un cercle coaxial à la partie filetée (11) du corps ; et
le passage (13) de conduction de pression a une section transversale circulaire correspondant au cercle.

9. Capteur de pression selon l'une quelconque des revendications 1 à 4, dans lequel :
le corps (10) comporte une partie filetée (11) de corps apte à être accouplée par vissage avec un objet de mesure (K1) ;
le passage (13) de conduction de pression est un trou s'étendant depuis une partie formant ouverture (12) du corps (10) jusqu'à une extrémité (13a) à l'intérieur du corps (10), l'extrémité (13a) du trou étant ménagée à un emplacement correspondant à une partie où la partie filetée (11) du corps est vissée sur l'objet de mesure (K1).

10. Capteur de pression selon la revendication 1 ou 2, dans lequel la tige (20) a une partie formant face (25) sur la surface latérale périphérique extérieure entre la partie filetée (24) et la membrane (21), la partie formant face servant à appliquer une force de serrage à la partie filetée (24) lorsque la tige (20) est vissée sur le corps (10).

11. Capteur de pression selon la revendication 10, dans lequel :
la tige (20) est épaisse au niveau de la partie formant face (25) dans une direction radiale de celle-ci en comparaison d'une partie de la tige (20) entre la partie filetée et la membrane autre que la partie formant face (25) ; et
la partie formant face (25) fait saillie vers l'extérieur dans la direction radiale en comparaison de la partie formant face.

12. Capteur de pression selon l'une quelconque des revendications 1 à 11, comprenant en outre une carte (40) de circuit disposée dans le corps et ayant une borne (T1, T3) de source de courant et une borne de sortie (72, 74), dans lequel :
la partie de détection (30) a un montage en pont (31) pour délivrer le signal électrique en réponse à la déformation de la membrane (21), et plusieurs séries de premiers et deuxièmes plots de contact (P1-P4) disposées de manière répétée et dans un ordre spécifique sur celle-ci :
dans chacune des plusieurs séries de premiers et deuxièmes plots de contact, le premier plot de contact est destiné à la borne de source de courant et le deuxième plot de contact est destiné à la borne de sortie ; et
un premier plot de contact des plusieurs séries de premiers et deuxièmes plots de contact est connecté à la borne de source de courant par un premier fil de connexion (44) ; et
un deuxième plot de contact des plusieurs séries de premières et deuxièmes plots de contact est connecté à la borne de sortie par un deuxième fil de connexion (44).

13. Capteur de pression selon la revendication 12, dans lequel la borne de source de courant et la borne de sortie peuvent être connectées au premier plot de contact et au deuxième plot de contact de façon qu'une caractéristique d'un circuit, assurée lorsque la partie de détection est disposée dans une position normale par rapport à la carte de circuit, puisse être maintenue même lorsqu'une position de la partie de détection est décalée par rapport à la position normale autour d'un axe de rotation de la partie filetée par suite de la rotation de la partie filetée.

14. Capteur de pression selon la revendication 12 ou 13, dans lequel :
la borne de source de courant est composée d'au moins deux bornes de sources de courant ;
la borne de sortie est composée d'au moins deux bornes de sortie ;
chaque premier plot de contact est composé d'au moins deux plots'; et
chaque deuxième plot de contact est composé d'au moins deux plots.

15. Capteur de pression selon l'une quelconque des revendications 12 à 14, dans lequel :
la partie de détection a une forme rectangulaire avec quatre parties formant côtés ;
quatre séries de premiers et deuxièmes plots de contact sont respectivement disposée sur les quatre parties formant côtés de la partie de détection ; et
l'ordre des premiers et deuxièmes plots de contact de chaque série est identique autour de l'axe de rotation de la partie filetée.

16. Capteur de pression selon l'une quelconque des revendications 1 à 15, dans lequel la partie filetée de la tige est directement accouplée avec le corps.
